# EUROPÄISCHE PATENTSCHRIFT

(11) **EP 0 543 146 B1**
(45) Veröffentlichungstag und Bekanntmachung des Hinweises auf die Patenterteilung: **09.08.1995**
(21) Anmeldenummer: 92117596.4
(22) Anmeldetag: 15.10.1992
(51) Int. Cl.: B60R 9/058

(54) **Stützfuss für einen Dachgepäckträger eines Kraftfahrzeugs**
Pedestal for an automotive vehicle roof rack
Pied de maintien pour porte-bagages de toit d'un véhicule automobile

(30) Priorität: 21.11.1991 DE 4138235
(43) Veröffentlichungstag der Anmeldung: 26.05.1993
(73) Patentinhaber: VOTEX GmbH, D-63303 Dreieich (DE)
(72) Erfinder: Kästner, Hans-Dieter, W-6054 Rodgau 1 (DE)
(74) Vertreter: Neubauer, Hans-Jürgen, Dipl.-Phys.

(56) Entgegenhaltungen:
- EP-A- 0 110 035
- EP-A- 0 492 513
- FR-A- 1 366 601
- FR-A- 2 587 660
- US-A- 3 722 765

## Beschreibung

Die Erfindung betrifft einen Stützfuß für einen Dachgepäckträger eines Kraftfahrzeugs nach dem Oberbegriff des Anspruchs 1.

Bei einem bekannten Dachgepäckträger (DE 35 32 170 A1) mit einem gattungsgemäßen Stützfuß sind jeweils zwei Stützfüße durch einen Querholm verbunden und die Stützfüße jeweils so ausgebildet, daß sie an einem zugeordneten, seitlichen Dachbereich mit einer Auflageplatte aufsetzbar und mit Hilfe einer Befestigungsvorrichtung am Dachrandbereich gehalten sind. Die Befestigungsvorrichtung umfaßt eine Spannklammer und eine Spannschraube. Die Spannklammer ist seitlich am Stützfuß angeordnet und überragt die Anlageplatte des Stützfußes nach unten mit einem Anlageteil, das für eine seitliche Anlage und ein Untergreifen des Dachrandbereichs zur Dachgepäckträgermitte hin schräg abgebogen ist.

Die Spannklammer liegt mit einem oberen Abstützteil bzw. dessen Anlagerand in einer Anlagelinie an einer Abstützfläche des Stützfußes an. Die Spannklammer weist zudem in einem Mittelteil eine Bohrung auf, durch die die Spannschraube von seitlich außen in ein Spannschraubengewinde im Stützfuß eingreift. Beim Anziehen der Spannschraube wird die Spannklammer sowohl mit dem Anlageteil gegen den Dachrandbereich als auch mit dem Abstützteil gegen die Abstützfläche gepreßt, wobei das Abstützteil solange an der schräg nach oben zur Mitte hin geneigten Abstützfläche gleitet, bis das untere Anlageteil fest am Dachrandbereich eingreift. Um diese Einstellung und das Gleiten der Spannklammer an der Abstützfläche zu ermöglichen, ist die Umgebung der Bohrung konkav kugelförmig als kugelige Schraubenkopfanlage ausgebildet, mit einem Übermaß des Bohrungsdurchmessers gegenüber dem Schraubenbolzendurchmesser, so daß die Spannklammer insgesamt an der kugeligen Schraubenkopfanlage verschwenkbar gehalten ist. Die kugelige Anlage des Schraubenkopfs selbst wird in an sich bekannter Weise über eine Beilagscheibe mit kugeliger Anlagefläche erreicht.

Die oben geschilderte Einstellung der Spannklammer und Anpassung an die Gegebenheiten am Fahrzeug wirken im Stand der Technik in einer Fahrzeugquerrichtung. Bei modernen Fahrzeugen verläuft jedoch der Dachrandbereich, an dem das Anlageteil der Spannklammer eingreift, in der Regel nicht parallel zur Fahrzeuglängsrichtung, sondern in einem konkaven Bogen zur Fahrzeugmitte hin, wobei die Neigung dieses Bogens, bezogen auf die Fahrzeuglängsrichtung im vorderen Dachbereich, unterschiedlich zu der im hinteren Dachbereich ist.

Die Anlageteile der Spannklammern als kurze, ebene Stege sollen für eine günstige Abstützung und gute Kraftübertragung flächig am Dachrandbereich anliegen und eingreifen, da nur punktförmige oder Anlagen zu einer wackeligen Befestigung des Dachgepäckträgers und zu einer mechanischen Überlastung mit der Gefahr von Beschädigungen an den Anlagestellen führen.

Bei dem o.g. bogenförmigen Verlauf des Dachrandbereichs wäre für eine flächige Anlage eine entsprechende Anpassung der Spannklammern bzw. Stützfüße an allen vier Abstützungen erforderlich, so daß vier unterschiedliche Stützfüße oder wenigstens vier unterschiedliche Spannklammern mit unterschiedlichen Winkelstellungen der Anlageteile erforderlich wären. Die vier Stützfüße wären dann keine Gleichteile mehr und somit hinsichtlich der Konstruktion, Herstellung, Montage und Lagerung unterschiedlich und aufwendig.

Es ist daher auch bekannt, bei den Stützfüßen eines Dachgepäckträgers eine selbsttätige Einstellung und Anpassung an einen bogenförmigen Längsverlauf eines Dachrandbereichs vorzusehen.

In einer bekannten Ausführung eines Dachgepäckträgers (DE 37 18 727 C2) wird ein unterer Teil des Stützfußes fest mit dem oberen Teil der B-Säule verschraubt. Mit diesem unteren Stützfußteil wird der obere Stützfußteil über eine Spannschraube mit kugeliger Anlagefläche zum Ausgleich von Längstoleranzen verbunden. Bei einer solchen Dachgepäckträgerausführung sind ersichtlich karosserieseitige Haltemittel erforderlich, die von vornherein an der Karosserie anzubringen sind.

In einer weiteren, bekannten Ausführungsform eines Stützfußes (DE 32 21 126 A1) werden Anpassungen an Krümmungen der Karosserie durch flexible Verbindungen im Zusammenwirken mit Dauermagneten vorgenommen. Eine solche Anordnung ist ersichtlich aufwendig und eine Verbindung über Dauermagnete kann weder den Anforderungen nach einer sicheren Verbindung noch den Anforderungen an eine Diebstahlsicherung genügen. Flexible Verbindungen neigen zudem zu Schwingungen, die das Fahrverhalten ungünstig beeinflußen und gerade beim Transport von Dachlasten zu vermeiden sind.

Aufgabe der Erfindung ist es demgegenüber, einen gattungsgemäßen Stützfuß für einen Dachgepäckträger eines Kraftfahrzeugs so weiterzubilden, daß sich dessen Befestigungsvorrichtung selbsttätig für eine flächige Anlage an einem längsgekrümmten Dachrandbereich eines Kraftfahrzeugs einstellt.

Diese Aufgabe wird mit den kennzeichnenden Merkmalen des Anspruchs 1 gelöst.
Gemäß Anspruch 1 weist der Anlagerand des Abstützteils eine konvexe Wölbung auf, deren Richtung sich gegen die Fahrzeugmitte erstreckt. Die Abstützfläche für den Anlagerand ist mit einer entsprechend der Wölbung des Anlagerandes konkaven Wölbung ausgeformt.

Vorteilhaft ergibt sich dabei, daß beim Anziehen der Spannschraube eine selbsttätige Längseinstellung und Positionierung der Spannklammer durch ein Verschwenken zwischen Anlagerand und Abstützfläche im wesentlichen unter Beibehaltung der linienförmigen Anlage entlang der Wölbung erfolgt. Diese Einstellung ergibt sich bei einer vorteilhaft flächigen Längsanlage des Anlageteils der Spannklammer an einem von der Fahrzeuglängsrichtung in Folge einer Krümmung etwas abweichenden Dachrandbereichs. Der Krümmungsradius einer solchen Dachrandkrümmung ist so groß, daß er im kurzen Längsbereich des Anlageteils, das üblicherweise eine flexible Auflage umfaßt, vernachlässigbar gering ist bzw. in der flexiblen Auflage aufgenommen wird. Somit ergibt sich durch diese Einstellung eine flächige Abstützung des Anlageteils mit einer festen Halterung des Stützfußes und einer günstigen Kraftübertragung, bei der punktförmige Abstützungen mit der Gefahr mechanischer Beschädigungen vermieden werden.

Im Vergleich zu den Längseinstellmöglichkeiten aus dem Stand der Technik ist die erfindungsgemäße Anordnung einfach und preisgünstig herstellbar und montierbar.

Wenn die Längskrümmung des Dachrandes nur wenig von einer Geraden in Fahrzeuglängsrichtung abweicht, bedarf es nur einer geringen Längseinstellung des Anlageteils. Für diesen Fall ist die Ausbildung der Wölbung an der Abstützung zwischen Anlagerand und Abstützfläche nicht so kritisch, da unter Berücksichtigung der Flexibilität bei Verwendung von Blech- und Kunststoffteilen bei einer geringen Verschwenkung noch die für eine feste Verbindung erforderliche, linienförmige Anlage verbleibt.

Insbesondere bei größeren Längsanpassungen ist die Wölbung nach Anspruch 2 kreisförmig in einer Ebene auszuführen, die sich parallel zur Schraubenachse und in Fahrzeuglängsrichtung erstreckt. Der Mittelpunkt für den Radius einer solchen kreisförmigen Wölbung liegt an der Stelle einer senkrechten Projektion des Mittelpunkts der kugeligen Schraubenkopfanlage auf die vorbezeichnete Ebene. Damit ergeben sich koaxiale Verhältnisse für die Längsverschwenkung und Längsanpassung bezüglich der kugeligen Schraubenkopfanlage und der kreisförmigen, linienförmigen Anlage zwischen Anlagerand und Abstützfläche. Die Abstützfläche ist somit über ihre Erstreckung quer zum Anlagerand etwa zylinderförmig ausgeführt, da beim Anziehen der Spannschraube und je nach Gegebenheiten in Fahrzeugquerrichtung der Anlagerand an der Abstützfläche unter Beibehaltung der kreisförmigen Anlage gleitend verschiebbar ausgeführt sein muß, um die Queranpassung durchführen zu können.

In einer konkreten, bevorzugten Ausführungsform nach Anspruch 3, bei der sich eine günstige Geometrie für die Befestigung ergibt, sind die Achse der Spannschraube und die Anlageplatte gegenüber der Querholmrichtung bzw. gegenüber einer Horizontalebene um einen Winkel von 5° bis 15° und die Abstützfläche um einen Winkel von 50° bis 70° schräg nach oben geneigt.

Eine entsprechend günstige Geometrie für die Spannklammer ergibt sich gemäß Anspruch 4, wenn deren Mittelteil als im wesentlichen flächiges, ebenes Bauteil in Funktionsstellung gegenüber der Querholmrichtung bzw. der Horizontalebene um einen Winkel von 50° bis 70° schräg nach oben geneigt ist. Die kugelige Schraubenkopfanlage ist dabei in einem mittleren Bereich ausgeformt, wobei insbesondere zur Verstärkung um den kugeligen Bereich ein Wulst vorgesehen sein kann. Das obere Abstützteil als im wesentlichen flächiges, ebenes Bauteil ist gegenüber dieser Ebene um einen Winkel von 5° bis 15° nach oben und das untere Anlageteil als im wesentlichen flache ebene Leiste um einen Winkel von 15° bis 60° schräg nach unten geneigt. Die Winkellage des unteren Anlageteils hängt im wesentlichen von den Gegebenheiten am jeweiligen Fahrzeug ab.

Anhand einer Zeichnung wird ein Ausführungsbeispiel der Erfindung mit weiteren Einzelheiten, Merkmalen und Vorteilen näher erläutert.

Es zeigen
- Fig. 1: einen Querschnitt durch einen Dachgepäckträger im Bereich eines Stützfußes,
- Fig. 2: einen Schnitt entlang der Linie A-A in Fig. 1 ohne Spannklammer und Abdeckung,
- Fig. 3: eine Spannklammer in einer Seitenansicht,
- Fig. 4: eine Ansicht der Spannklammer nach Fig. 3 in Richtung B,
- Fig. 5: eine Ansicht der Spannklammer nach Fig. 3 in Richtung C und
- Fig. 6: einen Schnitt durch die Spannklammer entlang der Linie D-D in Fig. 5.

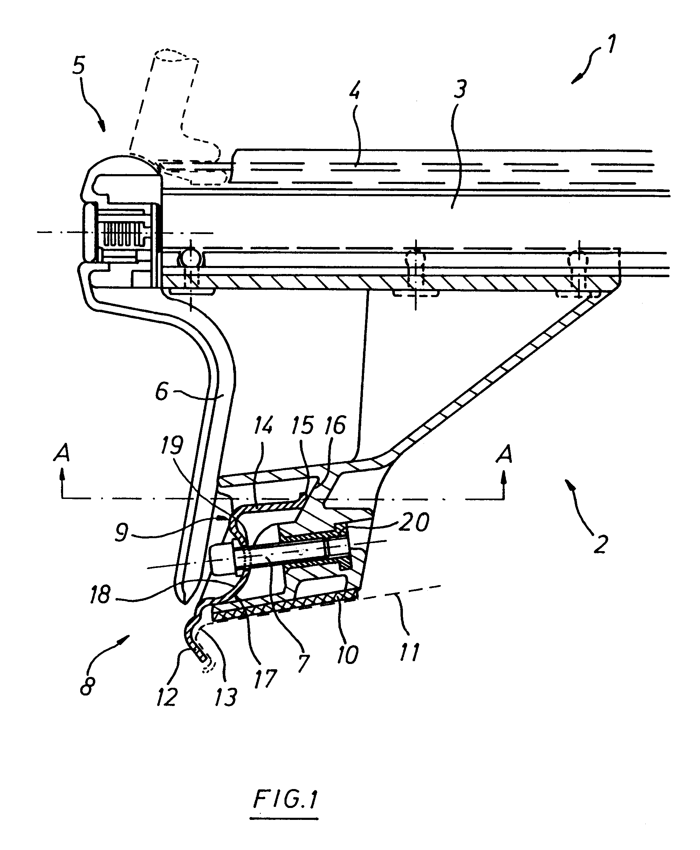

In Fig. 1 ist ein Schnitt durch einen Dachgepäckträger 1 im Seitenbereich eines Stützfußes 2 dargestellt. Dieser ist über einen Querholm 3 mit einem (nicht dargestellten) gegenüberliegenden Stützfuß 2 verbunden. Der Querholm 3 ist als Tragteil für Dachlasten ausgebildet, wobei in einer U-förmigen Längsnut 4 Halterungen, z.B. Skihalterungen, Fahrradhalterungen, etc., einschiebbar sind. An der Stirnseite des Querholms 3 ist ein Schloß 5 angebracht, mit dem sowohl der Zugang zur Längsnut 4 als auch über eine Abdeckung 6 der Zugang zu einer Spannschraube 7 absperrbar ist.

Die Spannschraube 7 ist Teil einer Befestigungsvorrichtung 8, die weiter eine Spannklammer 9 umfaßt.

Der Stützfuß 2 ist mit einer Anlageplatte 10 auf einen seitlichen Dachbereich 11 (strichliert gezeichnet) aufsetzbar. Die Spannklammer 9 ist seitlich am Stützfuß angeordnet und untergreift seitlich mit einem abgebogenen Anlageteil 12 einen Dachrandbereich 13.

Die Spannklammer 9 liegt weiter mit einem oberen Abstützteil 14 bzw. dessen Anlagerand 15 an einer schräg nach oben verlaufenden Abstützfläche 16 des Stützfußes 2 an. In einem Mittelteil 17 enthält die Spannklammer 9 innerhalb einer kugeligen Schraubenkopfanlage 18 eine Bohrung 19. Der Bohrungsdurchmesser ist dabei größer als der Durchmesser des Schraubenbolzens der Spannschraube 7. Diese greift in ein Gewinde 20 am Stützfuß 2 ein.

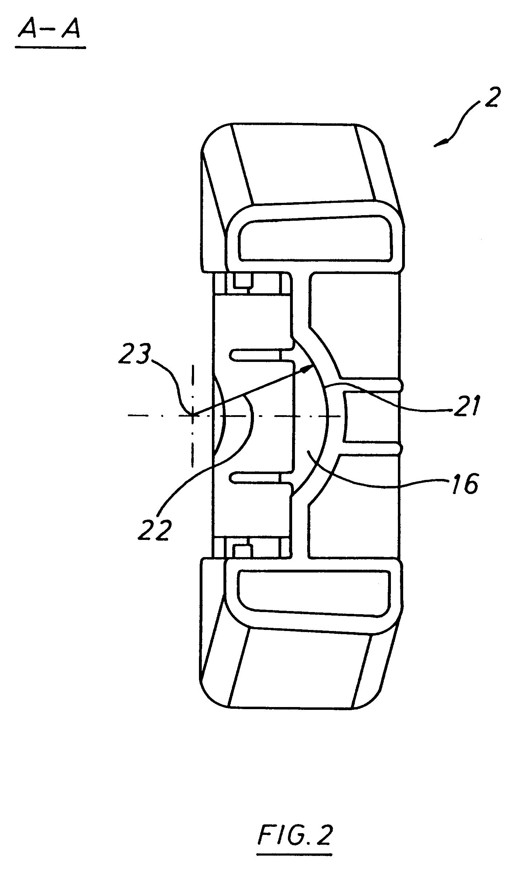

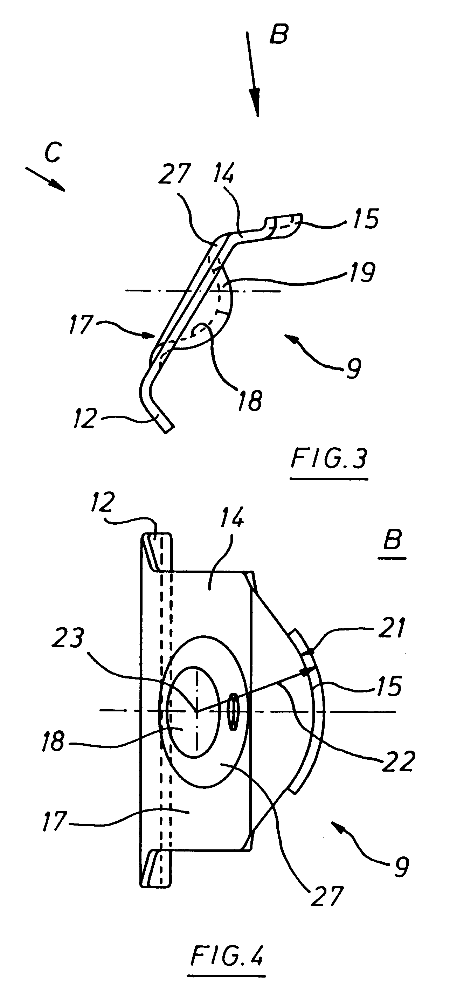

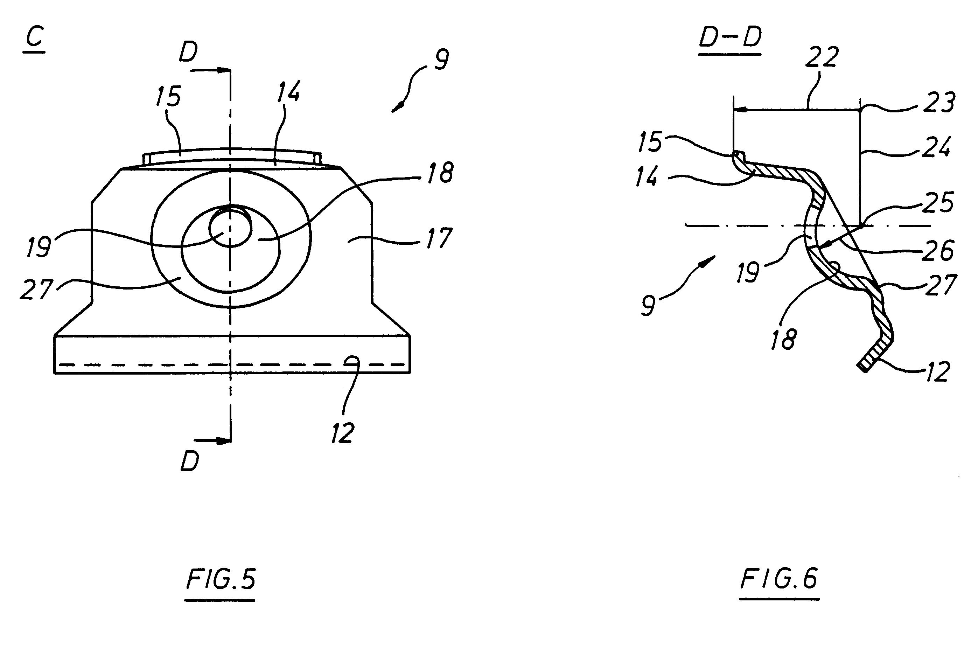

Anhand der weiteren Fig. werden Einzelheiten der Abstützfläche 16 und der Spannklammer 9 erläutert. Insbesondere aus den Fig. 2, 4 und 6 ist zu ersehen, daß der Anlagerand 15 des Abstützteils 14 eine konvexe, kreisförmige Wölbung 21 aufweist, wobei das Abstützteil 14 als flächiges, ebenes Bauteil gegenüber der Horizontalebene um einen Winkel von ca. 5° schräg nach oben in der Funktionsstellung (Fig. 1) geneigt ist. Der Radius 22 für diese kreisförmige Wölbung 21 hat seinen Mittelpunkt 23 in einer senkrechten Projektion 24 des Mittelpunkts 25 für den Radius 26 der kugeligen Schraubenkopfanlage 18 auf eine Ebene, die sich parallel zur Spannschraubenachse und in Fahrzeuglängsrichtung erstreckt. In dieser Ebene liegt insgesamt das Abstützteil mit der flächigen, kreisförmigen Wölbung (sh. insbesondere Fig. 6).

Eine entsprechende, kreisförmige Wölbung 21, jedoch hier in konkaver Form, ausgehend vom Mittelpunkt 23 mit dem Radius 22 ist an der Abstützfläche 16 vorgesehen (sh. Fig. 2). Diese Abstützfläche 16 ist wegen ihrer Erstreckung schräg nach oben somit Teil einer Zylinderfläche.

Die kugelige Schraubenkopfanlage 18 ist von einem eingeformten Wulst 27 umgeben.

Die dargestellte Befestigungsvorrichtung 8 hat folgende Funktion: Vor der Befestigung des Stützfußes 2 wird die Spannschraube 7 gelockert und der Stützfuß 2 mit der Anlageplatte 10 auf den seitlichen Dachbereich 11 aufgesetzt, wobei die Spannklammer mit ihrem Anlageteil 12 noch in einem Abstand zum Dachrandbereich 13 liegt. Die Spannklammer 9 wird nun mit dem Anlageteil 12 an den Dachrandbereich 13 herangeführt, bis sie dort flächig, wie in Fig. 1 dargestellt, anliegt. Durch dieses Heranführen hat sich der Anlagerand 15 des Abstützteils 14 in seiner Höhe an der schräg nach oben verlaufenden Abstützfläche 16 eingestellt, wobei eine entsprechende Verschwenkung in der kugeligen Schraubenkopfanlage 18 erfolgt ist.

Weiter hat sich die Spannklammer 9 in Fahrzeuglängsrichtung entsprechend dem Längsverlauf des Dachanlagebereichs 13 durch ein Verschwenken an der kreisförmigen Wölbung 21 eingestellt, in der Weise, daß das Anlageteil 12 flächig am Dachrandbereich 13 mit seiner gesamten Längserstreckung anliegt, ebenso wie der Anlagerand 15 mit einer durchgehenden Anlagelinie, das heißt nicht nur punktweise an der Abstützfläche 16 abgestützt ist. Dies wird im wesentlichen durch die beschriebene Zuordnung der Mittelpunkte 23 und 25 für die Radien 22 und 26 erreicht.

Zusammenfassend ist festzustellen, daß mit dem Anmeldungsgegenstand ein Stützfuß 2 zur Verfügung gestellt wird, der bei einfacher Ausführung eine geeignete Einstellung und Anpassung an gekrümmte Längsverläufe von Dachrandbereichen 13 ermöglicht.

## Patentansprüche

1. Stützfuß für einen Dachgepäckträger eines Kraftfahrzeugs,
bei dem zwei Stützfüße (2) durch einen Querholm (3) verbunden sind und die Stützfüße (2) am seitlichen Dachbereich (11) mit einer Anlageplatte (10) aufsetzbar und mit Hilfe einer Befestigungsvorrichtung (8) am Dachrandbereich (13) gehalten sind, wobei
die Befestigungsvorrichtung (8) aus einer Spannklammer (9) mit in Fahrzeuglängsrichtung vorgegebener Ausdehnung als Klammerlänge und einer Spannschraube (7) besteht,
die Spannklammer (9) seitlich am Stützfuß (2) angeordnet ist und mit einem unteren Anlageteil (12), das für eine seitliche Anlage und ein Untergreifen des Dachrandbereichs (13) zur Dachgepäckträgermitte hin abgebogen ist, die Anlageplatte (10) des Stützfußes (2) nach unten überragt,
die Spannklammer (9) mit einem oberen Abstützteil (14) bzw. dessen Anlagerand (15) in einer Anlagelinie an einer Abstützfläche (16) des Stützfußes (2) anliegt und
die Spannklammer (9) in einem Mittelteil (17) eine Bohrung (19) aufweist, durch die die Spannschraube (7) von seitlich außen in ein Spannschraubengewinde (20) im Stützfuß (2) eingreift und die Spannklammer (9) beim Anziehen der Spannschraube (7) sowohl mit dem Anlageteil (12) gegen den Dachrandbereich (13) als auch mit dem Abstützteil (14) gegen die Abstützfläche (16) preßbar ist, wobei die Umgebung der Bohrung (19) konkav kugelförmig als kugelige Schraubenkopfanlage (18) mit einem Übermaß des Bohrungsdurchmessers gegenüber dem Schraubenbolzendurchmesser und die Abstützfläche (16) als schräg nach oben zur Mitte hin geneigte Gleitfläche für den Anlagerand (15) des Abstützteils (14) ausgebildet sind,
dadurch gekennzeichnet,
daß der Anlagerand (15) des Abstützteils (14) eine konvexe Wölbung (21) aufweist, deren Richtung sich gegen die Fahrzeugmitte erstreckt, und
daß die Abstützfläche (16) für den Anlagerand (15) eine entsprechend der Wölbung des Anlagerands (15) geformte konkave Wölbung (21) aufweist, so daß bei einer flächigen Längsanlage des Anlageteils (12) an einem durch eine Längskrümmung von der Fahrzeuglängsrichtung abweichenden Dachrandbereich (13) und beim Anziehen der Spannschraube (7) eine selbsttätige Längseinstellung der Spannklammer (9) durch ein Verschwenken zwischen Anlagerand (15) und Abstützfläche (16) im wesentlichen unter Beibehaltung der linienförmigen Anlage entlang der Wölbung (21) erfolgt.

2. Stützfuß nach Anspruch 1, dadurch gekennzeichnet, daß die Wölbung (21) kreisförmig ist in einer Ebene, die sich parallel zur Spannschraube (7) und in Fahrzeuglängsrichtung erstreckt mit einem Radius (22) ausgehend von einem Mittelpunkt (23), der einer senkrechten Projektion (24) des Mittelpunkts (25) der kugeligen Schraubenkopfanlage (18) auf die vorbezeichnete Ebene entspricht.

3. Stützfuß nach Anspruch 1 oder 2, dadurch gekennzeichnet, daß die Achse der Spannschraube (7) und die Anlageplatte (10) gegenüber der Querholmrichtung bzw. gegenüber einer Horizontalebene um einen Winkel von 5° bis 15° und die Abstützfläche um einen Winkel von 50° bis 70° schräg nach oben geneigt sind.

4. Stützfuß nach einem der Ansprüche 1 bis 3, dadurch gekennzeichnet, daß das Mittelteil (17) der Spannklammer (9) als im wesentlichen flächiges, ebenes Bauteil in Funktionsstellung gegenüber der Querholmrichtung bzw. der Horizontalebene um einen Winkel von 50° bis 70° schräg nach oben geneigt ist und die kugelige Schraubenkopfanlage (18) in einem mittleren Bereich ausgeformt ist und
daß das obere Abstützteil (14) als im wesentlichen flächiges, ebenes Bauteil gegenüber dieser Ebene um einen Winkel von 5° bis 15° schräg nach oben und das untere Anlageteil (12) als im wesentlichen flache ebene Leiste um einen Winkel von 15° bis 60° schräg nach unten geneigt sind.

## Claims

1. A pedestal for a luggage roof rack of a motor vehicle
wherein two pedestals (2) are connected by a transverse bar (3) and the pedestals (2) can be positioned in the lateral roof zone (11) by means of an attachment plate (10) and are held on the roof edge zone (13) by means of a fixing device (8), in which arrangement
the fixing device (8) consists of a clamping clip (9) with its reach in the longitudinal direction of the vehicle given as the clip length, and a clamping screw (7),
the clamping clip (9) is arranged laterally on the pedestal (2) and projects downwards with a lower bearing part (12) beyond the attachment plate (10) of the pedestal (2), which part is bent towards the centre of the luggage roof rack for a lateral bearing contact and for fitting below the roof edge zone (13),
the clamping clip (9) bears with an upper bearing part (14), or its attachment edge (15) in a bearing line on a bearing surface (16) of the pedestal (2), and
the clamping clip (9) has in a central portion (17) a bore (19) through which the clamping screw (7) engages laterally from the outside in a clamping screw thread (20) in the pedestal (2), and as the clamping screw (7) is tightened, the clamping clip (9) can be pressed both with the bearing part (12) against the roof edge zone (13), and with the bearing part (14) against the bearing surface (16), in which arrangement the zone surrounding the bore (19) is designed with a concave spherical shape as a spherical screw-head bearing surface (18) with an oversized bore diameter as compared with the screwbolt diameter, and the bearing surface (16) is designed as a sliding surface sloping upwards towards the centre, for the attachment edge (15) of the bearing part (14),
characterized in that
the attachment edge (15) of the bearing part (14) has a convex curvature (21) whose direction extends towards the middle of the vehicle, and
that the bearing surface (16) for the attachment edge (15) has a shaped curvature (21) corresponding to the curvature of the attachment edge (15), so that with an areal longitudinal bearing of the bearing part (12) on a roof edge zone (13) deviating because of a longitudinal curvature from the longitudinal direction of the vehicle, and as the clamping screw (7) is tightened, there occurs an automatic longitudinal adjustment of the clamping clip (9) by a swivelling between the attachment edge (15) and the bearing surface (16), while substantially retaining the linear attachment along the curvature (21).

2. A pedestal according to claim 1, characterized in that the curvature (21) is circular in a plane which extends parallel to the clamping screw (7) and in the longitudinal direction of the vehicle, with a radius (22) starting from a centre (23) which corresponds to a perpendicular projection (24) of the centre (25) of the spherical screw-head bearing surface (18) onto the plane designated above.

3. A pedestal according to claim 1 or 2, characterized in that the axis of the clamping screw (7) and the attachment plate (10) are inclined to slant upwards relative to the direction of the transverse bar, or relative to a horizontal plane, by an angle of 5° to 15°, and the bearing surface is inclined to slant upwards by an angle of 50° to 70°.

4. A pedestal according to one of claims 1 to 3, characterized in that the central portion (17) of the clamping clip (9) as a substantially flat planar component is inclined in its operative position to slant upwards relative to the direction of the transverse bar or the horizontal plane by an angle of 50° to 70°, and the spherical screw-head bearing surface (18) is formed in a median zone and
that the upper bearing part (14) as a substantially flat planar component is inclined to slope upwards relative to this plane by an angle of 5° to 15° and the lower bearing part (12) is, as a substantially flat planar strip, inclined to slope downwards by an angle of 15° to 60°.

## Revendications

1. Pied pour un porte-bagages de toit pour véhicule automobile, dans lequel
deux pieds (2) sont reliés par une traverse (3) et peuvent être posés sur la zone latérale du toit (11) par l'intermédiaire d'une plaque d'appui (10) et maintenus à l'aide d'un dispositif de fixation (8) dans la zone du bord du toit (13),
le dispositif de fixation (8) comprenant une bride de serrage (9) qui a, dans le sens longitudinal du véhicule, une dimension préalablement définie comme étant la longueur de la bride, et une vis de serrage (7),
la bride de serrage (9) étant disposée latéralement par rapport au pied (2) et dépassant vers le bas la plaque d'appui (10) du pied (2) par une partie d'appui inférieure (12) repliée vers le milieu du porte-bagages pour assurer un appui latéral et un accrochage au-dessous de la zone du bord du toit (13),
la bride de serrage (9) s'appliquant, par une partie d'appui supérieure (14) ou par le bord d'appui (15) de celle-ci, sur une surface d'appui (16) du pied (2) le long d'une ligne de contact, et
la bride de serrage (9) présentant, dans sa partie centrale (17), un trou (19) à travers lequel la vis de serrage (7) est vissée, de l'extérieur latéralement, dans un taraudage (20) prévu dans le pied (2), et la bride de serrage (9) pouvant être pressée, lors du serrage de la vis de serrage (7), à la fois par sa partie d'appui (12) contre la zone du bord du toit (13) et par sa partie d'appui (14) contre la surface d'appui (16), la région qui borde le trou (19) étant réalisée sous une forme sphérique concave pour servir de siège sphérique (18) pour la tête de la vis, avec un diamètre du trou légèrement supérieur au diamètre de la tige de la vis, et la surface d'appui (16) étant réalisée en forme de surface de glissement oblique vers le haut et le milieu pour le bord d'appui (15) de la partie d'appui (14),
caractérisé en ce que le bord d'appui (15) de la partie d'appui (14) présente une courbure convexe (21) dirigée vers le milieu du véhicule, et
en ce que la surface d'appui (16) pour le bord d'appui (15) présente une courbure concave (21) de forme correspondante à celle de la courbure du bord d'appui (15), de sorte qu'il se produise, lors d'une application longitudinale, surface contre surface, de la partie d'appui (12) contre une zone du bord du toit (13) qui s'écarte de la direction longitudinale du véhicule par une courbure longitudinale, et lors du serrage de la vis de serrage (7), un positionnement longitudinal automatique de la bride de serrage (9) par pivotement entre le bord d'appui (15) et la surface d'appui (16), le contact linéaire le long de la courbure (21) étant essentiellement maintenu.

2. Pied selon la revendication 1, caractérosé en ce que la courbure (21) est de forme circulaire dans un plan qui s'étend parallèlement a la vis de serrage (7) et dans la direction longitudinale du véhicule, avec un rayon (22) a partir d'un centre (23) qui correspond à la projection verticale (24) du centre (25) du siège sphérique (18) de la tête de vis sur ledit plan.

3. Pied selon la revendication 1 ou 2, caractérisé en ce que l'axe de la vis de serrage (7) et la plaque d'appui (10) sont inclinés vers le haut par rapport à la direction de la traverse ou par rapport à un plan horizontal avec un angle compris entre 5° et 15°, et la surface d'appui (16) est inclinée vers le haut avec un angle de 50° à 70°.

4. Pied selon l'une quelconque des revendications 1 à 3, caractérisé en ce que la partie centrale (17) de la bride de serrage (9), en tant qu'élément essentiellement plat et plan, présente, en position de travail, une inclinaison vers le haut d'un angle compris entre 50° et 70° par rapport à la direction de la traverse ou par rapport au plan horizontal, et le siège sphérique (18) de la tête de vis est formé dans une zone centrale, et
en ce que la partie d'appui supérieure (14), en tant qu'élément essentiellement plat et plan, présente une inclinaison vers le haut d'un angle compris entre 5° et 15° par rapport à ce plan, et la partie d'appui inférieure (12), en tant que rebord essentiellement plat et plan, présente une inclinaison vers le bas d'un angle compris entre 15° et 60°.
